# EUROPEAN PATENT APPLICATION

(11) **EP 4 843 745 A1**
(43) Date of publication of application: **25.11.2026**
(21) Application number: 26165872.8
(22) Date of filing: 18.03.2026
(51) Int. Cl.: B29C 48/25, B29C 48/265, F16C 29/00, F16C 29/04, B29C 48/07, B29C 48/12, F16M 7/00

(54) **SUPPORT FOR AN EXTRUSION LINES AND EXTRUSION LINE COMPRISING SUCH SUPPORT**

(30) Priority: 19.05.2025 IT 202500011266
(71) Applicant: Mech I Tronic S.r.l., 15121 Alessandria (IT)
(72) Inventor: Passoni, Ferdinando, 15121 Alessandria (IT)
(74) Representative: Perani & Partners S.p.A.

(57) **Abstract**

Support (1) for extrusion lines (100) comprising:
- a lower body (2) intended to rest on a support surface (S) along a vertical direction (Z-Z);
- an upper body (3) intended to receive in abutment a support portion (100a) of the line (100) to support it along the vertical direction (Z-Z);
- kinematic members (4) interposed between the lower body and the upper body (2, 3) along the vertical direction (Z-Z) and configured to allow the relative movement thereof both along a longitudinal direction (X-X) and a transverse direction (Y-Y), so as to compensate for any thermal deformations of the extrusion line (100) in said directions;
wherein:
- the kinematic members (4) comprise rolling elements (40) movable along the transverse direction (Y-Y) and the longitudinal direction (X-X) with respect to the lower body (2) and/or the upper body (3);
- the kinematic members (4) have a first sliding surface (41) and a second sliding surface (42), respectively associated with the lower and upper body (2, 3), spaced along the vertical direction (Z-Z) by a gap (43);
- the rolling elements (40) are arranged in the gap (43) so as to be in contact on opposite sides with the first and the second sliding surface (41, 42).

## Description

### Technical Field

The present invention relates to a support for extrusion lines usable for the production of various products in polymeric material such as, for example, foils, sheets, rigid and expanded profiles, cellular sheets with two or more walls, composite panels of plastics with metals, corrugated and ribbed sheets, packaging strap and many others.

A further object of the present invention is an extrusion line, in particular of the bi-oriented type, comprising said support configured to compensate for the thermal deformations resulting from its operation.

### Background Art

In the field of hot extrusion of plastic materials, the need has long been felt to compensate for the thermal deformations of the extrusion lines since the latter, during their operation, reach temperatures significantly higher than ambient ones.

The failure to accommodate thermal deformations induces in the extrusion lines a state of structural stress which, as is known, affects the quality of the extruded products and, in the worst cases, the structural integrity of the line itself.

To compensate for the effects of the thermal excursion, it has been thought to mount the extrusion lines on wheels or rollers which, by sliding on the support surface, are configured to accommodate the elongation of the lines in their prevailing extension direction (hereinafter, "longitudinal direction").

This solution, although able to compensate for the thermal deformations of the lines along the longitudinal direction, does not completely solve the problem of structural stress as these wheels/rollers are unidirectional and therefore do not allow to accommodate the deformations transverse to the longitudinal direction.

This problem is most evident in extrusion lines of the bi-oriented type which, by deforming the extrudate both longitudinally and transversely, have substantial thermal deformations also in the transverse direction as well as in the longitudinal one.

In the state of the art, support devices are known comprising an upper plate slidably mounted on a base by means of guides. For example, the document CN114867590A shows a support having a first and a second pair of guides, mounted on opposite sides of an intermediate plate, configured to allow the movement of the upper plate with respect to the base along respective perpendicularly oriented directions.

Although the support of CN114867590A allows to compensate for deformations of the extrusion line along two transverse directions, this solution is however not free from drawbacks. Indeed, it is useful to note that this support is structurally complex since it employs a high number of kinematic components arranged on different levels to allow the relative movement between the upper plate and the base. In this solution, each movement (e.g. longitudinal or transverse movement) is enabled only by the respective pair of guides.

### Object of the Invention

In this context, the technical task underlying the present invention is to propose a support for extrusion lines and an extrusion line using said support which overcome the drawbacks of the known art mentioned above.

In particular, an object of the present invention is to provide a support for an extrusion line which is able to compensate for its longitudinal and transverse thermal deformations, and which is at the same time of simple construction.

It is also an object of the present invention to provide an extrusion line, in particular a bi-oriented extrusion line, capable of obtaining high-quality extrudates regardless of the state of thermal expansion to which it is subject during its operation.

### SUMMARY OF THE INVENTION

In accordance with the present invention, the indicated technical task and the specified objects are achieved by a support for extrusion lines and by an extrusion line using said support according to one or more of the claims reported below.

In particular, the present invention proposes to provide a support for an extrusion line comprising a lower body configured to rest on the ground, an upper body intended to receive in abutment a support portion of the extrusion line, and kinematic members, interposed between the lower body and the upper body, configured to allow the reciprocal movement thereof along both a longitudinal direction and a transverse direction directed orthogonally to the vertical direction (i.e. lying in a horizontal plane).

It is useful to note that the relative movement of the upper and lower body in the horizontal plane allows the support portion of the line to be freely arranged in different positions with respect to the ground, both along the longitudinal direction and the transverse one.

The support object of the present invention therefore allows to compensate for thermal expansions of the extrusion line in the horizontal plane - that is, both along the longitudinal direction and in the horizontal one - thus preventing the onset of states of structural stress in the extrusion line.

The installation of such supports on the support portions of extrusion lines therefore allows to provide extrusion lines - in particular of the bi-oriented type - capable of obtaining high-quality extrudates regardless of the state of thermal expansion of the line itself.

According to one aspect, the kinematic members comprise rolling elements, movable along the transverse and longitudinal direction with respect to the lower and/or upper body, arranged in a gap so as to be in contact on opposite sides with a first and a second sliding surface respectively associated with the lower body and the upper body.

This type and arrangement of the kinematic members allows to obtain a support having a simple structure, in which the rolling elements are responsible for the relative movement of the upper and lower body along both the transverse and longitudinal direction. Furthermore, this type and arrangement of the kinematic members allows to overcome the bulky and complex solution with pairs of guides arranged on different levels described in CN114867590A.

### LIST OF FIGURES

Further characteristics and advantages of the present invention will become more apparent from the indicative, and therefore non-limiting, description of a preferred but not exclusive embodiment of a support for extrusion lines and of an extrusion line using said support, as illustrated in the accompanying drawings in which:
- Figure 1 shows a top view of a support for an extrusion line according to the present invention, in which some hidden components are shown in dashed lines;
- Figure 2 shows a partially sectional side view of the support of Figure 1;
- Figure 3 shows a top view of the support of Figure 1 in a locked configuration;
- Figure 4 shows a partially sectional side view of the support of Figure 3;
- Figure 5a shows a side view of an extrusion line according to the present invention;
- Figure 5b shows a detail of Figure 5a relating to the support of Figure 1.

### DETAILED DESCRIPTION

The present description relates to a support 1 for an extrusion line 100, in particular for a hot extrusion line for plastic products such as, for example, foils, sheets, rigid and expanded profiles, cellular sheets with two or more walls, composite panels of plastics with metals, corrugated and ribbed sheets, packaging strap and many others.

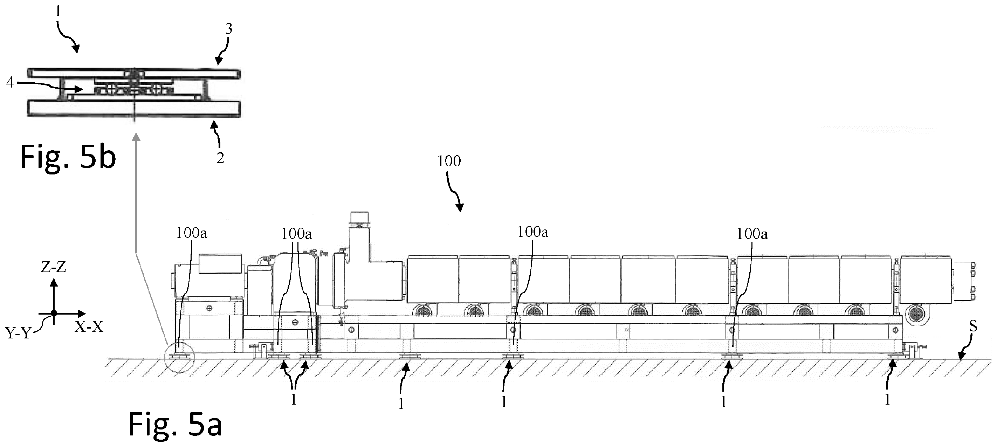

Such support 1 is configured to bear at least part of the weight of the extrusion line 100. In detail, as shown in figure 5a, the support 1 is configured to be interposed between a respective support portion 100a of the extrusion line 100 and a support surface S along the direction of action of the force of gravity (hereinafter, "vertical direction Z-Z").

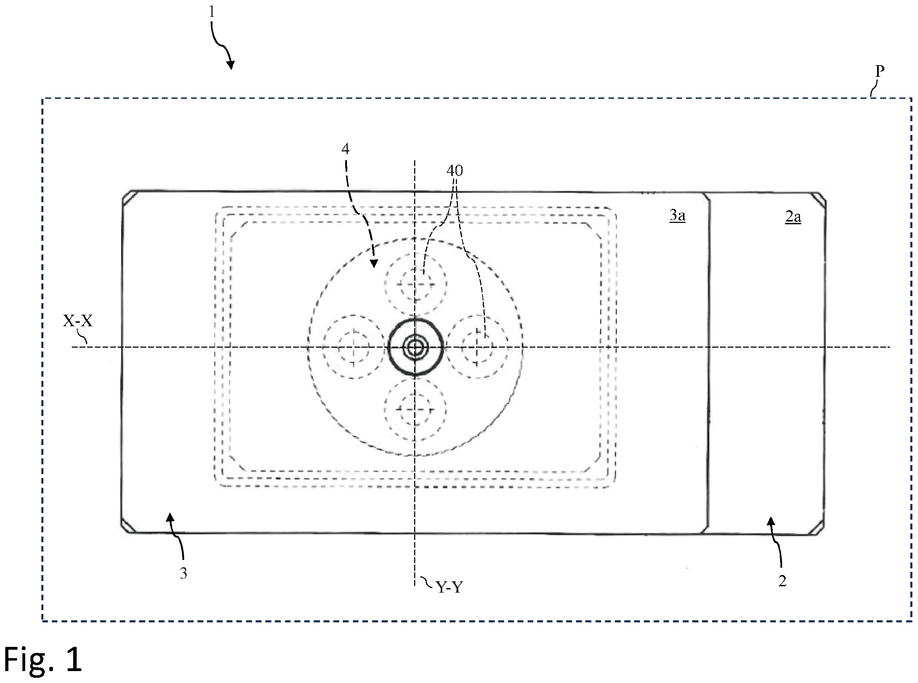

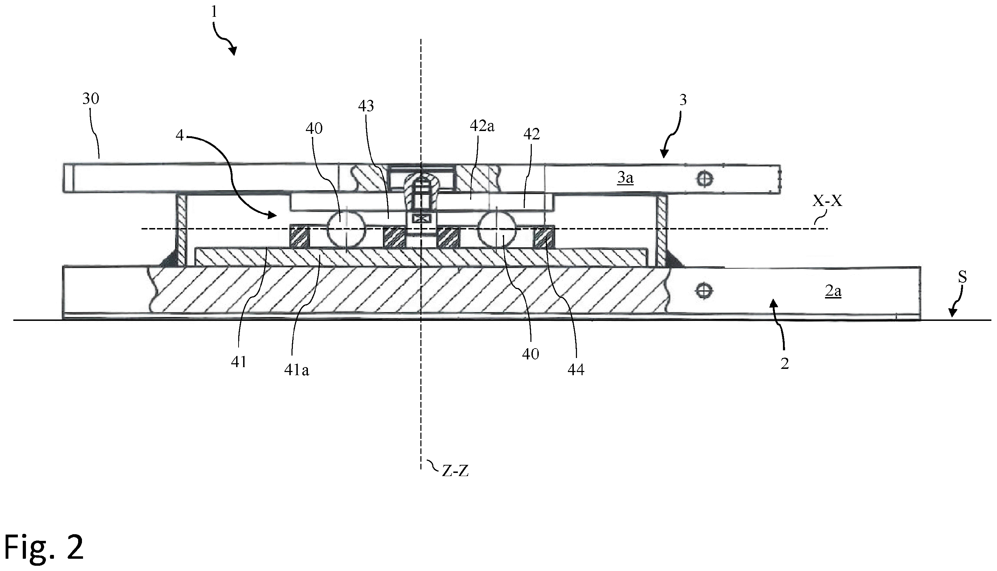

With reference to figures 1 and 2, the support 1 comprises a lower body 2 configured to rest on the support surface S along the vertical direction Z-Z and an upper body 3 configured to receive in abutment a respective support portion 100a of the extrusion line 100 along the same vertical direction Z-Z.

It is useful to note that, in use, due to the effect of the friction force, the upper body 3 and the relative support portion 100a of the extrusion line 100 are integrally movable in a horizontal plane P directed orthogonally to the vertical direction Z-Z. More specifically, the friction force acting at the interface between the support portion 100a and the upper body 3 is such as to make the latter integral along both a longitudinal direction X-X and a transverse direction Y-Y, directed orthogonally to the vertical direction Z-Z and defining said horizontal plane P.

In the embodiment shown in figures 1 and 2, the lower and upper body 2, 3 have a plate-like conformation which extends mainly along the longitudinal direction X-X and the transverse direction Y-Y.

In greater detail, still with reference to the embodiment of figures 1 and 2, the lower and upper body 2, 3 define a pair of plates 2a, 2b arranged on different levels along the vertical direction Z-Z so as to be spaced apart along the latter direction.

The lower body 2 is preferably configured to be fixed to the support surface S. For example, according to one embodiment, the lower body 2 has through holes directed along the vertical direction Z-Z and configured to receive respective captive screws suitable for engaging in the support surface S to fix the lower body 2 to the latter.

The support 1 also comprises kinematic members 4, interposed between the lower body 2 and the upper body 3 along the vertical direction Z-Z, configured to enable the relative movement between the lower body 2 and the upper body 3 both along the longitudinal direction X-X and along the transverse direction Y-Y, i.e. in the horizontal plane P in which the latter lie. The kinematic members therefore allow the upper body 3 to be freely arranged in different positions with respect to the lower body 2 along the longitudinal direction X-X and the transverse direction Y-Y.

It is useful to note that, in use, the kinematic members 4 allow the support 1 to accommodate any displacements of the support portion 100a of the extrusion line 100 with respect to the support surface S to compensate for any thermal deformations of the extrusion line 100 in both the longitudinal direction X-X and in the transverse one Y-Y.

It is good to specify that in the context of the present invention the term "compensate" is used to indicate adjustments of the arrangement of the support portions 100a along the longitudinal direction X-X and the transverse one Y-Y aimed at reducing and, possibly, at cancelling the performance variations of the extrusion plant 100 resulting from the phenomena of thermal deformation.

More specifically, in the context of the present description, with the term "compensate" it is intended to indicate the adjustments of the arrangement of the support portions 100a along the longitudinal direction X-X and the transverse one Y-Y, aimed at preventing, or at least limiting, states of structural stress in the extrusion line 100 due to the effect of thermal deformations.

According to one aspect, the kinematic members 4 comprise rolling elements 40 movable along the transverse direction Y-Y and the longitudinal direction X-X with respect to the lower body 2 and the upper body 3.

In the embodiment shown in figures 1-4, each rolling element 40 has a spherical conformation and is configured to move with a rotary motion along the longitudinal direction X-X and/or transverse Y-Y upon movement of the upper body 3 with respect to the lower body 2.

The rolling elements 40 are preferably made of metallic material or any other material suitable for supporting the weight force exerted by the support portion 100a of the extrusion line 100 on the support 1.

Preferably, the rolling elements 40 are organized along a circular path C so as to be spaced from one another.

According to one aspect, the kinematic members 4 also have a first sliding surface 41 and a second sliding surface 42, respectively associated with the lower body 2 and the upper body 3, between which the rolling elements 40 are arranged. In greater detail, the first and the second sliding surface 41, 42 are spaced along the vertical direction Z-Z by a gap 43 in which the rolling elements 40 are arranged so as to be in contact on opposite sides with the first and the second sliding surface 41, 42.

In use, upon movement of the upper body 3 with respect to the lower body 2, the rolling elements 40 move with a rotary motion on the first and second sliding surface 41, 42.

In the embodiment shown in figures 1-4, the kinematic members 4 comprise a lower plate 41a and an upper plate 42b, mounted (fixed) respectively on the lower body 2 and on the upper body 3, between which the rolling elements 40 are interposed along the vertical direction Z-Z. In use, upon the relative movement of the upper body 3 with respect to the lower body 2, the rolling elements 40 move with a rotary motion on the upper plate 42a and on the lower plate 41a.

In alternative embodiments to those shown in the accompanying figures, the lower plate 41a and the upper plate 42b are made in a single piece respectively with the lower body 2 and with the upper body 3. According to one aspect, the first and the second sliding surface 41, 42 can even be respectively formed by the lower body 2 and by the upper body 3.

According to one aspect, the lower plate 41a and the upper plate 42b respectively define said first sliding surface 41 and second sliding surface 42.

Preferably, the lower plate 41a and the upper plate 42a are made of nitrided steel, i.e. steel subjected to the industrial hardening process called nitriding. Advantageously, the high surface hardness of the nitrided steel allows to prevent the wear of the lower plate and of the upper one 41a, 42a and, in particular, the formation of grooves in which the rolling elements can get stuck, thus hindering the movement of the upper body 3 with respect to the lower body 2.

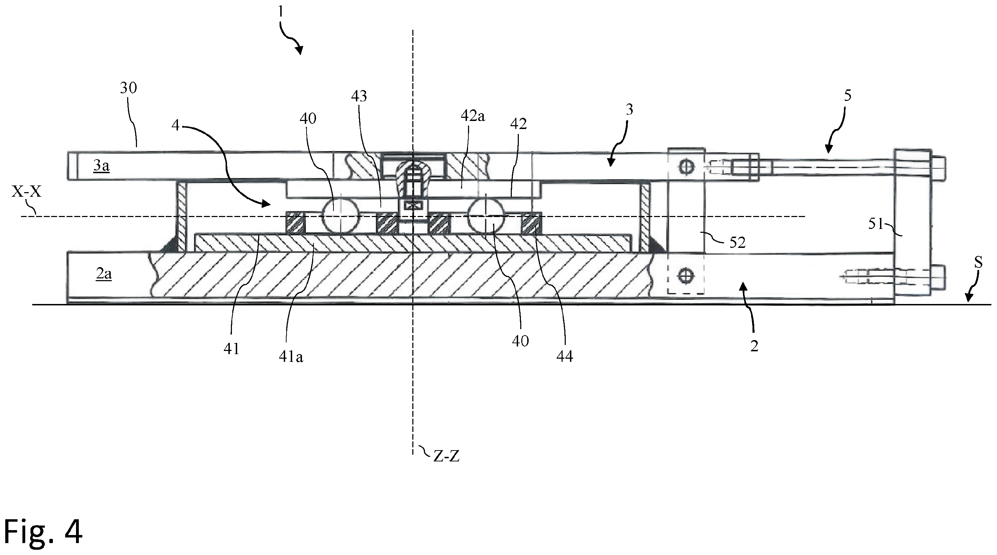

In the embodiment shown in figures 2 and 4, the kinematic members 4 comprise a containment element 44 configured to mutually constrain the rolling elements 40 along the longitudinal direction X-X and the transverse direction Y-Y. Advantageously, the containment element 44 allows all the rolling elements 40 to work simultaneously and synergistically so as to equally distribute the load on them and avoid their non-uniform wear.

Preferably, the containment element 44 is made of self-lubricating material such as, for example, teflon. Advantageously, this allows to reduce the wear of the rolling elements 40.

Preferably, the containment element 44 is configured to organize the rolling elements along said circular path C so as to be spaced from one another.

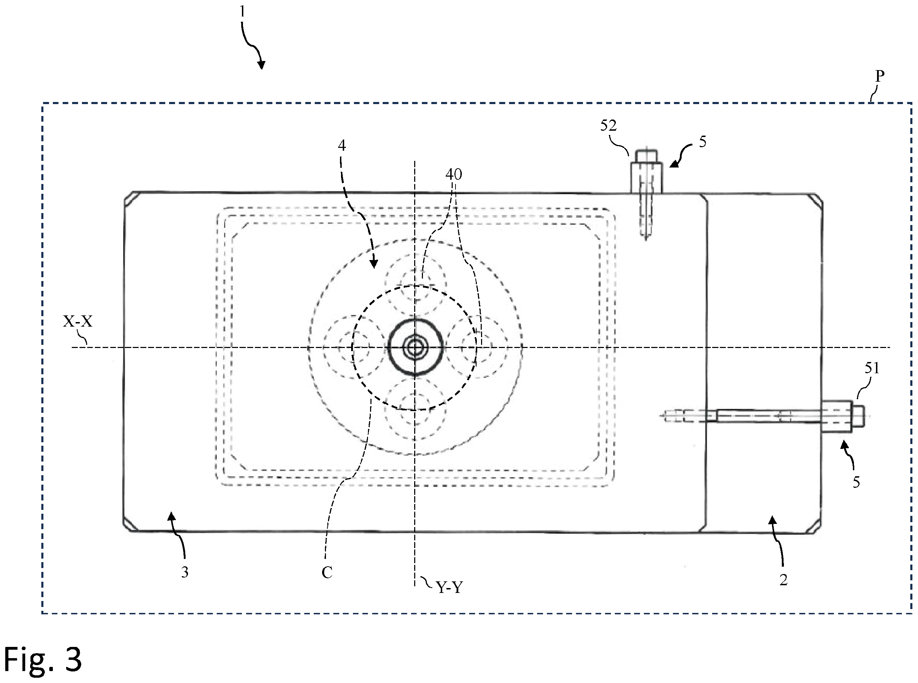

With reference to figures 3 and 4, the support 1 preferably comprises lock elements 5 (locking members) configured to be removably fixed to the lower body 2 and to the upper body 3 to selectively lock the relative position thereof along the height direction Z-Z, the longitudinal direction X-X, and the transverse direction Y-Y.

In detail, the support 1 is switchable between a use configuration, in which the lock elements 5 are disengaged from the lower and/or upper body 2, 3 so that the latter are reciprocally mobile (figures 1 and 2), and a locked configuration, in which the lock elements 5 are engaged with the lower and upper body 2, 3 so as to fix their reciprocal position (figures 3 and 4). In the locked configuration, the support element 1 behaves as if it were a single body so as to be more easily manageable and transportable when not used to support the extrusion line 100.

Therefore, advantageously, the lock elements 5 allow to handle the components of the support as a single body, preventing separations or involuntary relative movements which, in addition to complicating the transport and positioning operations, can be dangerous for the personnel in charge of transport and installation.

According to one aspect, the lock elements 5 comprise first lock elements 51 configured to be removably fixed to the lower body and upper body 2, 3 to fix the relative position thereof along the height direction Z-Z and the longitudinal direction X-X, and second lock elements 52 configured to be removably fixed to the lower body and upper body 2, 3 to fix the relative position thereof along the height direction Z-Z and the transverse direction Y-Y.

It is opportune to specify that the lock elements 5 are technically independent of the specific configuration of the kinematic members 4. The lock elements 5 can in fact be applied regardless of the nature of the kinematic members used, whether they are of the type with rolling elements or of a different type, for example linear guides.

A further object of the present invention is an extrusion line 100, in particular a hot extrusion line for plastic products such as, for example, foils, sheets, rigid and expanded profiles, cellular sheets with two or more walls, composite panels of plastics with metals, corrugated and ribbed sheets, packaging strap and many others.

According to one aspect, the extrusion line 100 is of the bi-oriented type.

Said extrusion line develops parallel to the longitudinal direction X-X and to the transverse direction Y-Y and has a plurality of support portions 100a (support legs), each configured to discharge onto the ground (i.e. on the support surface S) a respective share of the weight of the extrusion line 100.

In accordance with what is shown in figure 5a, the extrusion line 100 object of the present description has a plurality of supports 1 of the type described above, each mounted on a respective support portion 100a so as to be interposed between the latter and the support surface S along the direction of action of the force of gravity (vertical direction Z-Z).

It is useful to note that the supports 1 allow the support portions 100a to assume different spacings both along the longitudinal direction X-X and the transverse direction Y-Y and thus accommodate thermal deformations of the extrusion line 100 along these directions.

Regarding the aforementioned directions, it is good to specify that the longitudinal direction X-X and the transverse direction Y-Y, in addition to being directed perpendicularly to the vertical direction Z-Z, are orthogonal to each other. That is to say that the longitudinal, transverse and vertical directions X-X, Y-Y, Z-Z define a three-dimensional Cartesian reference system, in particular tri-orthogonal.

Obviously, a person skilled in the art may make numerous equivalent modifications to the variants described above, without thereby departing from the scope of protection defined by the appended claims.

## Claims

1. Support (1) for an extrusion line (100) configured to support at least part of the weight of the extrusion line (100), the support (1) comprising:
- a lower body (2) intended to rest on a support surface (S) along a vertical direction (Z-Z);
- an upper body (3) arranged above the lower body (2) along the vertical direction (Z-Z) and intended to receive in abutment a support portion (100a) of said extrusion line (100) to be supported along the vertical direction (Z-Z);
- kinematic members (4) interposed between the lower body (2) and the upper body (3) along the vertical direction (Z-Z) and configured to allow the relative movement between the lower body (2) and the upper body (3) along a longitudinal direction (X-X) and a transverse direction (Y-Y), wherein said longitudinal direction (X-X) and said transverse direction (Y-Y) define a horizontal plane (P) oriented orthogonally to the vertical direction (Z-Z), wherein the kinematic members (4) comprise rolling elements (40) movable along the transverse direction (Y-Y) and the longitudinal direction (X-X) relative to the lower body (2) and/or the upper body (3);
**characterized in that:**
- the kinematic members (4) have a first sliding surface (41) and a second sliding surface (42) associated with the lower and upper body (2, 3) respectively, the first sliding surface (41) and the second sliding surface (42) being spaced along the vertical direction (Z-Z) by a gap (43);
- the rolling elements (40) are arranged in the gap (43) so as to be in contact on opposite sides with the first and second sliding surface (41, 42).

2. Support (1) according to claim 1, where the kinematic members (4) comprise:
- a lower plate (41a) mounted on or made in a single piece with the lower body (2);
- an upper plate (42a) mounted on or made in a single piece with the upper body (3);
- the rolling elements (40) are interposed between the lower plate (41a) and the upper plate (42a) along the vertical direction (Z-Z), the rolling elements (40) being configured to rotate on the upper plate (41a) and lower plate (42a) upon the relative movement of the upper body (3) relative to the lower body (2) along the longitudinal direction (X-X) and the transverse direction (Y-Y).

3. Support (1) according to claim 2, wherein the upper plate (42a) and lower plate (41a) are made of nitrided steel.

4. Support (1) according to any one of the preceding claims, wherein the kinematic elements (4) comprise a containment element (44) configured to mutually constrain the rolling elements (40) along the longitudinal direction (X-X) and the transverse direction (Y-Y).

5. Support (1) according to claim 4, wherein the containment element (44) is made of self-lubricating material.

6. Support (1) according to any one of the preceding claims, comprising one or more lock elements (5) configured to be removably attached to the lower body (2) and the upper body (3) to lock the relative position thereof along the height direction (Z-Z), the longitudinal direction (X-X) and the transverse direction (Y-Y).

7. Support (1) according to claim 6, wherein the lock elements 5 comprise:
- first lock elements (51) configured to be removably attached to the lower body (2) and upper body (3) to lock the relative position thereof along the height direction (Z-Z) and longitudinal direction (X-X);
- second lock elements (52) configured to be removably attached to the lower body (2) and upper body (3) to lock the relative position thereof along the height direction (Z-Z) and transverse direction (Y-Y).

8. Extrusion line (100) having a plurality of support portions (100a) configured to discharge on a support surface (S) a respective part of the weight of the extrusion line (100), **characterised in that it comprises** a plurality of supports (1) according to any one of the preceding claims mounted on respective support portions (100a).
